# FASCICULE DE BREVET EUROPEEN

(11) **EP 2 449 508 B1**
(45) Date de publication et mention de la délivrance du brevet: **05.06.2013**
(21) Numéro de dépôt: 11713318.1
(22) Date de dépôt: 07.03.2011
(51) Int. Cl.: G06K 17/00, G06K 7/10, A47F 9/04, G07G 1/12

(54) **PROCEDE ET SYSTEME DE GESTION AUTOMATISEE D'OBJETS MUNIS D'ETIQUETTES RFID.**
VERFAHREN UND SYSTEM ZUR AUTOMATISIERTEN VERWALTUNG VON MIT RFID-ETIKETTEN VERSEHENEN OBJEKTEN
METHOD AND SYSTEM FOR THE AUTOMATED MANAGEMENT OF OBJECTS PROVIDED WITH RFID TAGS

(30) Priorité: 02.11.2010 FR 1059021
(43) Date de publication de la demande: 09.05.2012
(73) Titulaire: I.E.R., 92150 Suresnes (FR)
(72) Inventeur: GENTELET, Franck, 78280 Guyancourt (FR); BOUVERESSE, Jean-Clément, 95110 Sannois (FR)
(74) Mandataire: Akdogan, Nurhak
(86) Numéro de dépôt international: PCT/FR2011/050470
(87) Numéro de publication internationale: WO 2012/025676

(56) Documents cités:
- EP-A1- 1 688 863
- WO-A1-99/05658
- US-A1- 2007 081 671

## Description

La présente invention concerne un procédé de gestion automatisé d'objets munis d'étiquettes RFID. Elle concerne également un système mettant en oeuvre un tel procédé.

Le domaine de l'invention est le domaine de la gestion automatisé d'objets munis d'étiquettes RFID et plus particulièrement l'encaissement, c'est-à-dire à l'achet/vente, automatisé d'objets munis d'étiquettes RFID.

De nos jours les étiquettes RFID sont utilisées couramment pour l'identification, le suivi et la gestion d'objets. Les systèmes utilisant la technologie RFID permettent une gestion automatisée plus fiable et plus rapide d'objets dans de nombreux domaines.

L'utilisation des étiquettes RFID s'accompagne de la nécessité de disposer d'appareils de lecture d'étiquettes RFID et plus particulièrement de solutions de gestions et de traitement d'étiquettes RFID dans le cadre de vente d'articles munis d'étiquettes RFID.

Actuellement, il existe des étiquettes RFID pour l'identification d'un produit. Ces étiquettes RFID sont utilisées pour stocker une ou plusieurs données associées au produit sur lequel sont disposées ces étiquettes RFID.

Certains systèmes de paiement utilisent les étiquettes RFID pour la gestion de l'encaissement au niveau d'une borne d'encaissement ou d'une caisse de paiement d'un supermarché par exemple et plus particulièrement pour réaliser un paiement automatique ou semi-automatique. Ces systèmes comprennent des moyens de lecture d'étiquettes RFID disposés sur des bornes de paiement ou au niveau d'un tapis d'une caisse de paiement pour identifier chacun des produits qu'un client désire acheter et des moyens pour consulter une base de données en vue de déterminer le prix de chacun des produits identifiés pour communiquer au client la somme à payer. Dans les systèmes de paiement totalement automatisés, le client est ensuite dirigé vers des moyens de paiement électroniques pour régler le montant dû.

Cependant, en vue de limiter le vol, chacun des produits portant une étiquette RFID porte en outre un dispositif antivol destiné à coopérer avec des moyens de détection pour signaler le vol d'un produit lorsqu'un individu tente de le dérober. Ce dispositif antivol doit être désactivé une fois que le produit à été acheté légalement par un consommateur.

Ainsi, actuellement les systèmes de gestion de produits portant des étiquettes RFID comprennent d'une part des moyens de lecture d'une étiquette RFID et des moyens de détection et de désactivation d'un dispositif antivol, ce qui rend ces systèmes complexe et onéreux. Par ailleurs, ces systèmes nécessitent de déposer sur chaque produit une étiquette RFID et un dispositif antivol, ce qui représente un coût non négligeable en termes de moyens mais également en terme de main d'oeuvre.

Le document WO-A-99/05658 divulgue un dispositif de détection d'un objet dans une zone de détection, le dispositif est destiné à détecter les étiquettes RFID sur l'objet dont la donné d'identification est associée à des données particulières. Ce dispositif comprend des moyens de lecture pour lire une donnée d'identification de l'étiquette RFID et des moyens pour déterminer si l'étiquette a été désactivée en fonction de données stockées relatives à l'étiquette.

Un but de la présente invention est de remédier aux inconvénients précités.

Un autre but de l'invention est de proposer un procédé et un système de gestion automatisé d'objets munis d'étiquettes RFID moins coûteux.

Enfin, un autre but de l'invention est de proposer un procédé et un système de gestion d'objets munis d'étiquettes RFID moins gourmand en terme de main d'oeuvre.

L'invention propose d'atteindre les buts précités par un procédé de gestion automatisé d'objets munis chacun d'une étiquette RFID comportant au moins une donnée d'identification associée audit objet, ledit procédé comprenant les étapes selon la revendication 1.

Les étapes de lecture et de désactivation des étiquettes sont généralement effectuées conjointement à l'encaissement des produits auxquels ces étiquettes sont associées.

La lecture d'une donnée d'identification peut être réalisée par des premiers moyens de lecture comprenant par exemple une antenne RFID et un module RFID comprenant par exemple un lecteur RFID aussi appelé coupleur RFID.

Ainsi, le procédé selon l'invention utilise une même étiquette RFID à la fois pour l'identification de l'objet et pour la détection de fraude. Autrement dit, l'identification et la détection de fraude sont réalisées en utilisant une même fréquence.

En outre, le procédé selon l'invention permet d'utiliser les mêmes moyens pour réaliser à la fois pour la lecture et la désactivation de ces étiquettes RFID.

On notera que l'étape de lecture pourra être désignée par la suite « première étape de lecture ».

Le procédé selon l'invention peut en outre comprendre une détection de présence d'au moins un objet à l'emplacement de lecture.

Avantageusement, la désactivation d'au moins une étiquette peut être une désactivation fonctionnelle de l'étiquette RFID. Une telle désactivation peut être réalisée de plusieurs façons.

Dans une première version l'étiquette peut être désactivée en envoyant une requête de type « kill » à l'étiquette RFID qui se désactive. Dans ce cas, l'étiquette sera désactivée pour toujours et il ne sera plus possible de l'utiliser.

Dans une deuxième version, il est possible d'allouer un BIT de la puce de l'étiquette RFID, par exemple le bit EAS (Electronic Article surveillance). Ainsi, une première valeur, par exemple 1, de ce bit peut être associée au fait que l'étiquette est active et, une deuxième valeur, par exemple 0, de ce bit peut être associée au fait que l'étiquette est désactivée.

Dans une troisième version, il est possible d'écrire une donnée dans un flag dans une mémoire de la puce de l'étiquette RFID.

Dans la deuxième et la troisième version, il sera possible de réutiliser la même étiquette RFID et éventuellement la même donnée d'identification dans le cadre d'une gestion additionnelle de l'objet, par exemple lorsque l'objet est mis/remis en vente dans une nouvelle structure commerciale, ou réintroduit dans la gestion initiale, par exemple lorsqu'un objet est retourné dans un magasin où il a été vendu. Dans ces cas, il n'est pas nécessaire de changer l'étiquette RFID qui peut simplement etre activée fonctionnellement. Dans certains cas, la ou les données d'identification peuvent être changées.

Le procédé selon l'invention peut en outre comprendre une étape de détection d'au moins une étiquette RFID dont la donnée d'identification n'a pas été lue. Une telle étape permet de détecter un objet déposé à l'emplacement de lecture dont l'étiquette n'a pas été lue. Une telle étape permet également de détecter un objet qui n'a pas été déposé à l'emplacement de lecture par un individu de manière involontaire ou volontaire, par exemple en vue de dérober l'objet. Cette étape de détection est réalisée par des moyens de détection de fraude qui peuvent par exemple comprendre des deuxièmes moyens de lecture RFID ou des moyens de détection d'une étiquette RFID active.

En d'autres termes, la détection d'au moins une étiquette active dont la donnée d'identification n'a pas été lue (lors de la première étape de lecture) comprend :
- dans un premier mode de réalisation, une étape d'interrogation d'étiquettes RFID et une étape de détection de l'émission de données par une étiquette RFID active suite à l'interrogation (lorsque l'étiquette a été désactivée à l'aide d'une requête « kill », par exemple),
- dans un deuxième mode de réalisation, une étape de lecture d'une donnée relative à la désactivation de l'étiquette (notamment lorsqu'un BIT est alloué à l'état de l'étiquette ou qu'une donnée est inscrite dans un flag de l'étiquette).

La détection peut également comprendre une deuxième étape de lecture d'au moins une donnée d'identification de l'étiquette RFID active, à l'aide notamment des deuxième moyens de lecture décrits plus haut, ainsi qu'une étape pour déterminer si la donnée d'identification a été lue lors de la première étape de lecture, en fonction de données relatives aux étiquettes, préalablement mémorisées, notamment stockées dans une base de données, généralement suite à la première étape de lecture par les premiers moyens.

Cette étape peut constituer à elle seule une étape de détection ou peut être effectuée en supplément des étapes décrites plus haute dans le cas où l'étiquette a été déclarée active après ces opérations.

On notera que, dans le cadre de l'invention, « mémoriser » peut signifier « entrer en mémoire de nouvelles données » ou « modifier des données déjà entrées en mémoire ».

Selon une version particulière du procédé selon l'invention, la détection d'au moins une donnée d'identification non lue peut être réalisée par comparaison d'une donnée d'identification avec des données d'identification préalablement lues et mémorisées. L'étape de comparaison constitue alors au moins une partie de l'étape de détermination.

Dans ce cas, les moyens de détection de fraude comprennent des deuxièmes moyens de lecture d'une donnée d'identification dans une étiquette RFID qui n'est pas désactivée.

En effet, il peut arriver qu'une étiquette RFID dont la donnée d'identification a bien été lue par les premiers moyens de lecture n'a pas été désactivée pour des raisons inconnues, même si le produit associé à cette étiquette a été correctement lu au niveau de l'emplacement de lecture et payé. Le fait de réaliser la détection d'une étiquette RFID non lue, notamment par comparaison de données d'identification, permet d'éviter des fausses alertes causées par une étiquette RFID dont la donnée d'identification a bien été lue par les premiers moyens de lecture mais qui n'a pas été désactivée alors elle aurait dû l'être.

Dans ce dernier cas, l'étape de détection de fraude peut également comprendre une étape de désactivation d'une étiquette RFID qui a bien été lue par les premiers moyens de lecture mais qui n'a pas été désactivée lors de l'étape de désactivation.

Le procédé selon l'invention peut en outre comprendre une activation d'un moyen de signalisation lorsqu'une étiquette non lue est détectée. Ainsi, une signalisation ou alerte est émise lorsqu'une étiquette non lue est détectée.

Avantageusement, le procédé selon l'invention peut comprendre, pour au moins une donnée d'identification lue, notamment lors de la première étape de lecture, une consultation d'au moins une donnée associée avec ladite donnée d'identification et mémorisée dans une base de données. Cette consultation peut être réalisée pendant ou après la lecture des étiquettes RFID. Ainsi, il est possible d'accéder à des données associé à l'objet portant l'étiquette RFID lue. Ces données peuvent par exemple comprendre des données relatives à un prix, un poids ou un type d'objet.

Le procédé selon l'invention peut alors comprendre un affichage de ces données sur un moyen d'affichage en vue de vérifier la concordance des données, par exemple pour vérifier que la donnée d'identification lue correspond bien à un objet qui est identique à l'objet qui porte l'étiquette.

Le procédé selon l'invention peut en outre comprendre une étape de traitement d'une donnée associée à l'objet et enregistrée dans une base de données en vue par exemple de déterminer un prix à régler lorsque le procédé selon l'invention est mis en oeuvre pour la vente d'objets.

Dans cette optique, le procédé selon l'invention comprend un calcul d'une donnée, par exemple un prix, relative à l'ensemble des étiquettes lues en fonction des données de prix associées à chacun des objets dans la base de données et consultées lors de ou après la lecture des étiquettes RFID selon l'invention.

Le procédé comprend en outre une étape de paiement automatisé du prix correspondant à l'ensemble des objets.

Ainsi, le procédé selon l'invention peut être mis en oeuvre pour le passage en caisse, c'est-à-dire pour l'achat/vente, automatisé d'objets munis d'étiquettes RFID et plus particulièrement de capsules de café.

Selon un autre aspect de l'invention il est proposé un dispositif de gestion automatisé d'objets munis chacun d'une étiquette RFID selon la revendication 11.

Les moyens pour désactiver peuvent être compris partiellement ou intégralement dans les moyens de lecture.

Dans un mode de réalisation préféré du système selon l'invention, les moyens de lecture sont agencés pour à la fois réaliser la lecture des étiquettes RFID et la désactivation des étiquettes.

On notera que les moyens de lecture du dispositif de gestion pourront par la suite être désignés « premiers moyens de lecture ».

Le dispositif selon l'invention peut en outre comprendre des moyens de consultation, dans une base de données, d'au moins une donnée associée à au moins une donnée d'identification lue. Ces moyens peuvent comprendre des moyens d'établissement d'une connexion filaire ou sans fil avec une base de données qui peut être une base de données locale ou distante.

Le dispositif selon l'invention comprend en outre des moyens pour déterminer au moins une donnée relative à l'ensemble des étiquettes lues. De tels moyens peuvent comprendre un calculateur ou un module de calcul pour traiter les données lues.

Le dispositif selon l'invention comprend en outre des moyens de paiement automatisés, par exemple par carte bancaire (avec et sans contact), carte de fidélité, par espèces ou cheque déjeuner

L'invention a également pour objet un système selon la revendication 15.

Les moyens de détection d'une étiquette RFID non lue peuvent, dans un mode de réalisation particulier du système selon l'invention, comprendre un portique prévu pour être traversé par les individus et réalisant une détection d'étiquettes RFID non lues.

Dans le cas où les moyens de détection comprennent le dispositif de détection précité, le dispositif de gestion comprend généralement des moyens de mémorisation de données en fonction des données lues par les premiers moyens de lecture, à l'emplacement prédéterminé de la mémoire, à laquelle est également relié à ce dispositif de gestion.

Le système selon l'invention peut en outre comprendre des moyens de signalisation de la détection d'au moins une étiquette non lue, plus particulièrement des moyens d'alarme. Ces moyens de signalisation peuvent être agencés pour être activés ou commandés par les moyens de détection d'une étiquette RFID non lue.

Le système selon l'invention peut avantageusement être appliqué à l'encaissement, c'est-à-dire à l'achat/vente, automatisé d'objets munis d'étiquettes RFID.

D'autres avantages et caractéristiques apparaîtront à l'examen de la description détaillée d'un mode de réalisation nullement limitatif, et des dessins annexés sur lesquels :
- les figures 1A et 1B sont des représentations schématiques d'un procédé selon l'invention ;
- la figure 2 est une représentation d'un système selon l'invention ; et
- la figure 3 est une représentation schématique d'un appareil informatique mis en oeuvre dans le système de la figure 2.

Sur les figures et dans la suite de la description, les éléments communs à plusieurs figures conservent la même référence.

Les exemples qui seront décrits ci-dessous concernant l'encaissement automatisé dans un site tel qu'une boutique proposant à la vente d'objets munis chacun d'une étiquette RFID.

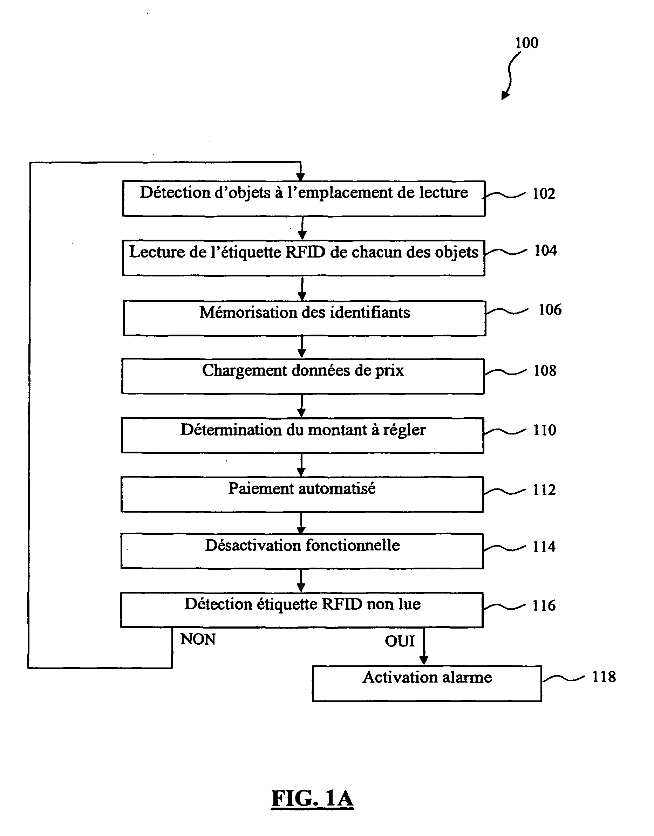

La figure 1A est une représentation sous la forme d'un organigramme des étapes d'un procédé 100 selon l'invention.

Ce procédé 100 est mis en oeuvre dans l'application décrite ci-après, pour faciliter l'achat de produits dans une boutique. Pour cela, chaque produit ou objet, notamment constitué par une capsule de café, est muni d'une étiquette RFID comprenant au moins une donnée d'identification du produit, par exemple un identifiant de celui-ci. L'étiquette RFID peut également comprendre d'autres informations relatives à l'objet, etc. Elle est généralement placée sur l'objet avant son approvisionnement en boutique mais pourrait être placée sur l'objet alors qu'il est déjà disponible dans la boutique.

Le procédé 100 comprend une première étape 102 lors de laquelle des moyens de détection de présence détectent la présence d'objets à un emplacement de lecture. Ces objets sont déposés à l'emplacement de lecture par un consommateur qui désire acheter ces objets.

Lors d'une étape 104, dite première étape de lecture, pour chaque objet présent à l'emplacement de lecture, une donnée d'identification associée cet objet est lue par des premiers moyens de lecture dans l'étiquette RFID présente sur cet objet. La lecture des étiquettes RFID présentes sur les objets déposés à l'emplacement de lecture est réalisée en masse, c'est-à-dire sans ordre particulier. Plusieurs étiquettes RFID peuvent être lues en même temps.

Chacune des données d'identification lue est enregistrée dans des moyens de mémorisation locaux ou distants, notamment dans une base de données stockée dans ces moyens de mémorisation. Cette mémorisation des données d'identification peut être réalisée soit au fur et à mesure de la lecture, c'est-à-dire que dès qu'une nouvelle donnée d'identification est lue depuis une nouvelle étiquette RFID, soit à la fin de la lecture de toutes les étiquettes RFID lors d'une étape 106 réalisée après la première étape de lecture 104. Les données peuvent être rassemblées dans un même groupe lorsqu'elles sont présentées ensemble à la lecture.

A l'étape 108, pour chaque donnée d'identification lue, une donnée de prix associée à cette donnée d'identification est chargée depuis une base de données. Cette base de données peut être soit une base de données locale accessible sur un appareil informatique ou une base de données distante, c'est-à-dire accessible depuis un serveur distant au travers d'un réseau de communication.

Cette donnée de prix peut également être inscrite dans la mémoire de la puce de l'étiquette RFID. Dans ce cas, l'étape 108 n'est pas réalisée.

Lors d'une étape 110, un montant à régler est calculé en fonction des données de prix chargées à l'étape 108.

Le consommateur est invité à régler ce montant lors d'une étape 112 par des moyens de paiement automatisés, par exemple par carte bancaire.

Lorsque le consommateur a réalisé le paiement, chacune des étiquettes RFID lue est désactivée fonctionnellement. Cette désactivation peut être réalisée soit au fur et à mesure de la lecture des étiquettes RFID, c'est-à-dire que dès qu'une nouvelle donnée d'identification est lue depuis une nouvelle étiquette RFID cette étiquette RFID est aussitôt désactivée, soit à la fin de la lecture de toutes les étiquettes RFID lors d'une étape 114 après l'étape 112 de paiement. La désactivation d'une étiquette est réalisée en lui envoyant une requête de désactivation fonctionnelle, par exemple une requête de type « kill ».

Ensuite, le consommateur retire les objets qu'il achetés de l'emplacement de lecture. Après avoir retiré ces objets, il quitte le point d'encaissement ou la boutique par un portique de détection d'étiquettes RFID non lue. Lorsqu'il passe par ce portique, une étape 116 de détection d'étiquettes non lues est réalisée. La détection d'une étiquette RFID non lue permet de détecter un article non encaissé.

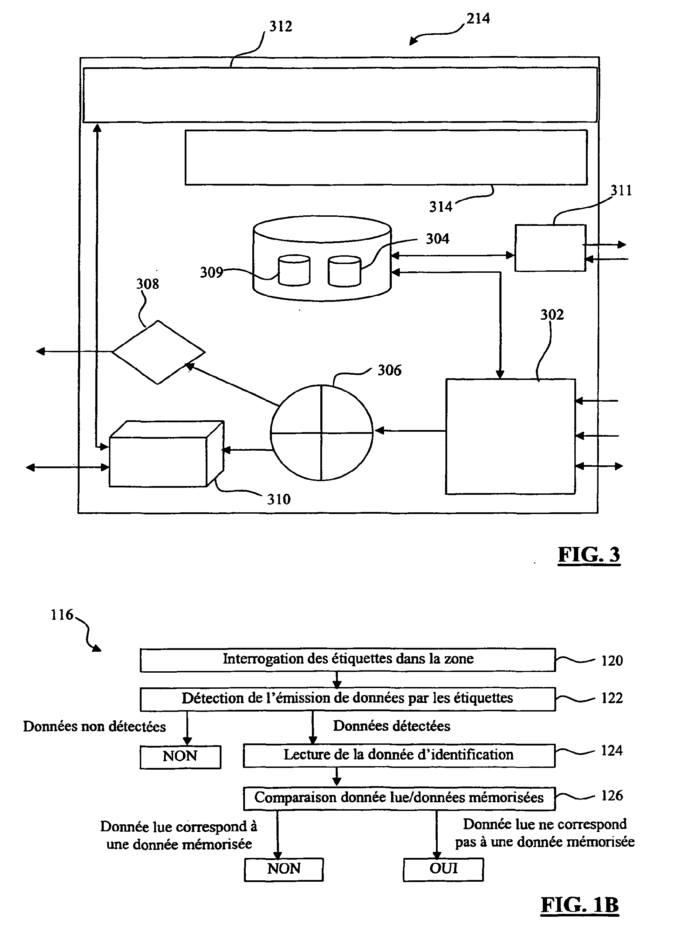

En référence à la figure 1B, dans une première version, l'étape de détection peut comprendre les opérations suivantes :
- interrogation 120 de toutes les étiquettes RFID, les seules étiquettes pouvant répondre (en émettant des données) à cette interrogation étant celles qui n'ont pas été désactivées lors de la première lecture des étiquettes, au moment de l'encaissement,
- détection 122 de l'émission de données en réponse à l'interrogation,
- si une étiquette RFID est toujours active alors il est considéré que cette étiquette n'a pas été lue et que l'objet portant cette étiquette n'a pas été payé.

Toujours en référence à la figure 1B, dans une autre version, plus sûre, cette détection peut comprendre en outre les opérations suivantes, effectuées après les opérations énumérées ci-dessous et pour les étiquettes identifiées comme actives lors de ces étapes :
- lecture 124 de l'identifiant de l'étiquette RFID active (désignée deuxième étape de lecture d'un moyen d'identification),
- comparaison 126 des identifiants aux identifiants préalablement lus et mémorisées : si un identifiant n'apparaît pas parmi ces identifiants alors l'étiquette RFID correspondant n'a pas été lue et l'objet portant cette étiquette RFID n'a pas été payé.

Cette version permet d'éviter les erreurs dues à une non-désactivation des étiquettes payées.

Lorsqu'au moins une étiquette RFID non lue est détectée, des moyens de signalisation sont activés lors d'une étape 118 pour signaler la présence d'une étiquette RFID non lue.

Dans le cas contraire un nouveau cycle d'encaissement est réalisé avec un nouveau consommateur.

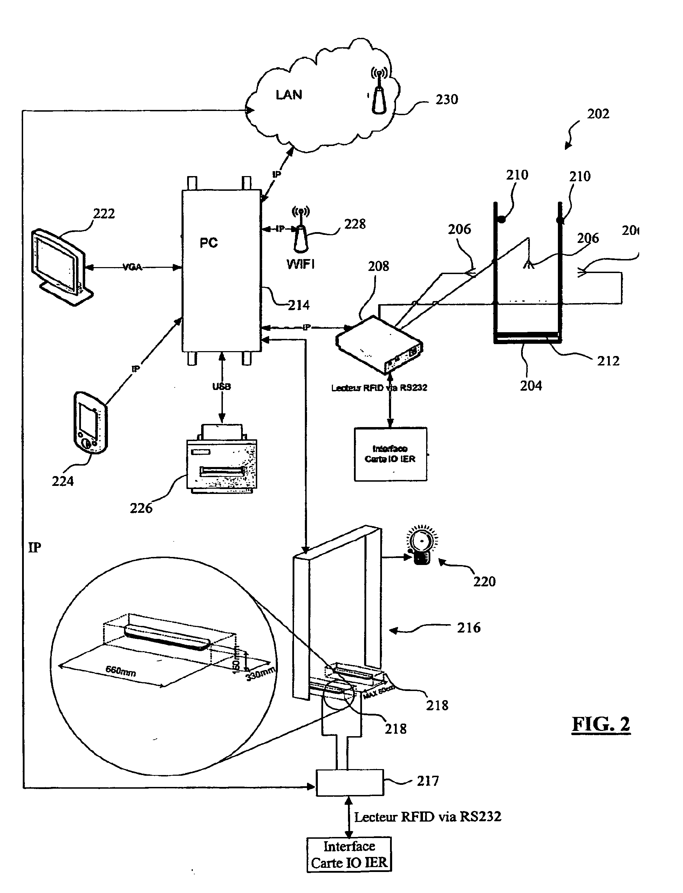

La figure 2 est une représentation d'un système selon l'invention.

Le système 200 représenté sur la figure 2 comprend des premiers moyens de lecture RFID 202. Ces premiers moyens de lecture RFID 202 comprennent une box de lecture 204 prévue pour recevoir tous les objets que le consommateur désire acheter, plusieurs antennes 206 d'émission et de réception de signaux radio fréquences. Les antennes 206 coopèrent avec un lecteur RFID 208 pour émettre/recevoir des données vers/depuis chacune des étiquettes RFID présentes dans la box de lecture 204.

Le système 200 comprend en outre des détecteurs de présence 210 d'au moins un objet placé dans la box de lecture et des moyens de pesée tels qu'une balance 212. Ce sont les détecteurs de présence 210 qui initient directement ou indirectement la lecture d'étiquettes RFID se trouvant sur les objets déposés dans la box de lecture 204.

Le système 200 comprend en outre un appareil informatique central 214 réalisant la gestion de l'ensemble des opérations. Cet appareil informatique 214 sera décrit plus en détail plus loin.

Le système 200 comprend en outre un portique de détection 216 d'étiquette non lue. Le portique de détection comporte deux antennes 218 disposées au sol ou en double totem classique et prévues pour interroger chacune des étiquettes passant au travers du portique 216. Ces antennes 218 coopèrent également avec un lecteur 217. Les antennes 218 et le lecteur 217 forment des moyens d'interrogation des étiquettes ainsi que des moyens de lecture, désignés deuxièmes moyens de lecture, de leur contenu.

Le système 200 comprend également des moyens de signalisation visuels et/ou sonore 220, tels qu'une alarme visuelle/sonore, qui sont activés lorsqu'une étiquette RFID non lue est détectée par le portique 216.

Le système 200 comprend également au moins un écran d'affichage 222 et au moins un moyen de paiement automatisé 224, par exemple par carte bancaire et des moyens d'impression par exemple une imprimante 226.

Le système 200 comprend des moyens de communication sans fil, par exemple des moyens 228 de communication par WIFI ainsi que des moyens de connexion à un réseau 230 de type Internet. De tels moyens permettent la communication entre les différentes entités du système, notamment l'appareil de gestion 214, la box de lecture 204 et le portique 216.

La figure 3 est une représentation schématique du contenu non exhaustif de l'appareil informatique 214.

On notera que l'appareil 214 peut être d'un seul tenant avec la box de lecture 204, ou avec le portique de détection 216 ou être distant de ces deux entités. Il peut de toute façon communiquer avec ces deux entités, c'est-à-dire émettre des données en direction de ces entités et recevoir des données provenant de ces entités, par exemple grâce à des moyens de communication tels que 228 ou 230.

L'appareil 214 comprend un module de gestion 302.

Ce module de gestion 302 reçoit des données depuis les capteurs de présence 210 de la box de lecture 204 et envoie un requête de lecture au lecteur RFID 208 qui lance une opération de lecture (ou première étape de lecture).

Ce module de gestion 302 reçoit ensuite des données d'identification depuis le lecteur RFID 208. Pour chaque nouvelle donnée d'identification reçue par le module de réception 302, le module réception 302 consulte une base de donnée 304 pour accéder à des données de prix et de description du l'objet auquel est associé l'identifiant.

Les données de prix sont transmises à un module de calcul 306 qui détermine le prix total pour l'ensemble des objets présents dans la box de lecture 204. Le prix total est envoyé vers un module d'affichage 308 qui traite les données et réalise leur affichage sur l'écran d'affichage 222.

Les données de prix sont également envoyées à un module de paiement 310 qui réalise le paiement automatisé grâce au terminal de paiement 224 par carte bancaire et éventuellement à une interface 312 de connexion un réseau de type internet.

Lorsque le paiement est effectué, le module de gestion 302 émet une requête au lecteur RFID 208 pour désactiver fonctionnellement toutes les étiquettes RFID depuis lesquelles les données d'identification ont été lues dans le cadre de la dernière opération de lecture. Chaque étiquette RFID est désactivée en lui envoie une requête « kill » d'autodestruction.

Les données d'identification lues sont également stockées dans une autre base de donnée 309, désignée base de données des étiquettes autorisées, répertoriant les étiquettes payées.

Ce module de gestion 302 reçoit également des données depuis la balance 212 pour des opérations de vérification de la nature des objets en fonction du poids total des objets déposés dans la box de lecture 204 et le poids associés à chacun de ces objets dans la base de données 304.

L'appareil 214 comporte également un module de comparaison 311.

Ce module est apte à recevoir les données lues par le lecteur 217 du portique 216, comparer les données lues et transmises par le lecteur 217 et les données de la base de données 309 des étiquettes autorisées, à laquelle il est apte à accéder. S'il ne trouve pas de correspondance entre ces données, il détermine que les données n'ont pas été lues et commande l'activation des moyens de signalisation 220.

Dans le cas contraire, on pourrait envisager qu'il retourne un message au lecteur 217 attestant que l'objet a été payé et donnant à celui-ci l'instruction de désactiver fonctionnellement l'étiquette. Dans ce cas, le portique, par exemple les deuxièmes moyens de lecture, comprennent des moyens de désactiver fonctionnellement l'étiquette. Le module peut également effacer la ligne correspondant à l'étiquette ou au groupe de l'étiquette de la base de données 309.

L'appareil informatique 214 comporte également une interface 314 de communication par WIFI.

On notera que l'ensemble des moyens 202, 302, et éventuellement, 210, 212, 224, 226, 306, 308 forment un dispositif de gestion selon l'invention. Le dispositif de détection selon l'invention est constitué a minima des moyens 216, 218, 310.

Bien entendu l'invention n'est pas limitée aux exemples qui viennent d'être décrits.

Par exemple, la désactivation des étiquettes peut être effectuée en inscrivant une donnée dans un flag de la puce RFID ou en changeant la valeur d'un BIT de celle-ci.

Dans l'un de ces cas, le portique de détection peut dans un premier temps, lire une donnée de désactivation de chacune des étiquettes dans la zone prédéterminée. Si cette donnée indique que l'étiquette n'a pas été désactivée, il peut lire une donnée d'identification de l'étiquette et solliciter le module de comparaison.

Dans tous les cas, l'étape de comparaison et le module de comparaison sont optionnels. Ils peuvent également être remplacés par d'autres moyens. Par exemple, au lieu de créer une base de données 309, distincte de la base de données 304, on peut modifier la valeur d'une donnée, dite donnée de paiement, associée à une donnée d'identification d'une étiquette dans la base de donnée 304 lorsque l'étiquette a été lue par les premiers moyens de lecture et payée. Dans ce cas, l'opération de détermination correspondra à lire dans la base de donnée 304 la valeur de la donnée de paiement associée à la donnée d'identification lue par les deuxièmes moyens de lecture.

Le module de comparaison peut être placé ailleurs que dans l'appareil de gestion, par exemple dans le portique de détection 216, en association avec le lecteur 217.

Les moyens d'affichage du prix ou de pesée des objets situés à l'emplacement de lecture, et les moyens correspondants, sont également optionnels. D'autres étapes ou moyens peuvent également être inclus dans le procédé ou le système.

## Revendications

1. Procédé de gestion automatisé d'objets munis chacun d'une étiquette RFID comportant au moins une donnée d'identification associée audit objet, ledit procédé comprenant :
- une étape de lecture (104), dite première étape de lecture, d'au moins une donnée d'identification enregistrée dans au moins une étiquette RFID disposée sur au moins un objet positionné à un emplacement, dit de lecture,
- une étape de désactivation (114) d'au moins une étiquette RFID dont la donnée d'identification a été lue de sorte qu'elle n'est pas détectée lors d'une étape de détection (116) de fraude,
- une étape de calcul (110) d'une donnée relative à l'ensemble des étiquettes lues, et
- une étape de paiement automatisé (112) en fonction de ladite donnée relative à l'ensemble des étiquettes lues,
ladite étape de désactivation (114) et ladite étape de calcul (110) étant réalisées après une même et unique étape de lecture.

2. Procédé selon la revendication 1, **caractérisé en ce qu'**il comprend en outre une étape de détection (102) de présence d'au moins un objet à l'emplacement de lecture.

3. Procédé selon l'une quelconque des revendications précédentes, **caractérisé en ce que** la désactivation (114) d'au moins une étiquette RFID est une désactivation fonctionnelle.

4. Procédé selon l'une quelconque des revendications précédentes, **caractérisé en ce qu'**il comprend en outre une étape de détection (116) d'au moins une étiquette RFID dont la donnée d'identification n'a pas été lue lors de la première étape de lecture.

5. Procédé selon la revendication 4, **caractérisé en ce que** la détection (116) d'au moins étiquette RFID dont la donnée d'identification n'a pas été lue lors de la première étape de lecture comprend :
- une étape d'interrogation (120) d'étiquettes RFID et une étape de détection (122) de l'émission de données par une étiquette RFID active suite à l'interrogation, ou
- une étape de lecture d'une donnée de l'étiquette relative à la désactivation.

6. Procédé selon l'une quelconque des revendications 4 ou 5, dans lequel, la détection (116) comprend :
- une deuxième étape de lecture (124) d'au moins une donnée d'identification de l'étiquette RFID active, et
- une étape (126) pour déterminer si l'étiquette a été lue lors de la première étape de lecture, en fonction de données relatives aux étiquettes, préalablement mémorisées, notamment suite à la première étape de lecture.

7. Procédé selon la revendication 6, dans lequel l'étape de détection, notamment l'étape de détermination, comprend une comparaison (126) d'une donnée d'identification de l'étiquette RFID active avec des données d'identification préalablement lues lors de la première étape de lecture, ledit procédé comprenant une étape de mémorisation (106) des données d'identification lues lors de la première étape de lecture (104).

8. Procédé selon l'une quelconque des revendications 4 à 7, **caractérisé en ce qu'**il comprend en outre une activation (118) d'un moyen de signalisation (220) lorsqu'une étiquette RFID non lue lors de la première étape de lecture est détectée.

9. Procédé selon l'une quelconque des revendications précédentes, **caractérisé en ce qu'**il comprend en outre, pour au moins une donnée d'identification lue lors de la première étape de lecture (104), une consultation (108) d'au moins une donnée associée avec ladite donnée d'identification mémorisée dans une base de données (304).

10. Procédé selon l'une quelconque des revendications précédentes mis en oeuvre pour le paiement automatisé de capsules de café munies d'étiquettes RFID.

11. Dispositif de gestion automatisé d'objets munis chacun d'une étiquette RFID comportant une donnée d'identification associée audit objet, ledit dispositif comprenant :
- des moyens de lecture (202), désignés premiers moyens de lecture, d'au moins une donnée d'identification enregistrée dans au moins une étiquette RFID disposée sur au moins un objet positionné à un emplacement, dit de lecture,
- des moyens agencés pour désactiver au moins une étiquette RFID dont la donnée d'identification a été lue,
- des moyens de calcul (110) d'une donnée relative à l'ensemble des étiquettes lues, et
- des moyens de paiement automatisé (112) en fonction de ladite donnée relative à l'ensemble des étiquettes lues,
lesdits moyens de désactivation (114) et de calcul (110) sont configurés pour être mis en oeuvre après une même et unique étape de lecture réalisée par lesdits premiers moyens de lecture.

12. Dispositif selon la revendication 11, **caractérisé en ce qu'**il comprend en outre des moyens de détection (210) de présence d'au moins un objet à l'emplacement de lecture.

13. Dispositif selon l'une quelconque des revendications 11 ou 12, **caractérisé en ce qu'**il comprend en outre des moyens de consultation (302), dans une base de données (304), d'au moins une donnée associée à au moins une donnée d'identification lue.

14. Application du dispositif de gestion selon l'une quelconque des revendications 11 à 13 au paiement automatisé d'objets munis d'étiquettes RFID.

15. Système comprenant un dispositif de gestion selon l'une quelconque des revendications 11 à 13 et des moyens de détection d'une étiquette non lue.

16. Système selon la revendication 15, dans lequel :
- les moyens de détection sont constitués par un dispositif de détection d'un objet dans une zone prédéterminée, ledit dispositif de détection comprenant des deuxièmes moyens de lecture (217, 218) pour lire, dans une zone prédéterminée, au moins une donnée d'identification de l'étiquette et des moyens (311) pour déterminer si l'étiquette a été lue par les premiers moyens de lecture, en fonction de données relatives aux étiquettes et stockées à un emplacement prédéterminé (309) d'une mémoire à laquelle est relié le dispositif de détection, et
- le dispositif de gestion comprend des moyens de mémorisation (302) de données en fonction des données lues par les premiers moyens de lecture (202), à l'emplacement prédéterminé (309) de la mémoire, à laquelle est également relié ce dispositif de gestion.

17. Système selon l'une quelconque des revendications 15 ou 16, **caractérisé en ce qu'**il comprend en outre des moyens de signalisation (220) de la détection d'au moins une étiquette non lue.

## Patentansprüche

1. Verfahren zum automatisierten Verwalten von Objekten, die jeweils mit einem RFID-Tag versehen sind, das wenigstens eine dem Objekt zugeordnete Identifikationsangabe umfasst, wobei das Verfahren umfasst:
- einen Schritt zum Lesen (104), sogenannten ersten Leseschritt, wenigstens einer Identifikationsangabe, die in wenigstens einem RFID-Tag, das auf wenigstens einem an einem sogenannten Leseort positionierten Objekt angeordnet ist, gespeichert ist,
- einen Schritt zum Deaktivieren (114) wenigstens eines RFID-Tags, dessen Identifikationsangabe gelesen worden ist, so dass es während eines Schrittes (116) zur Betrugserkennung nicht erfasst wird,
- einen Schritt zum Berechnen (110) einer Angabe bezüglich aller gelesenen Tags und
- einen Schritt zum automatisierten Bezahlen (112) in Abhängigkeit der Angabe bezüglich aller gelesenen Tags,
wobei der Deaktivierungsschritt (114) und der Berechnungsschritt (110) nach ein und demselben Leseschritt durchgeführt werden.

2. Verfahren nach Anspruch 1, **dadurch gekennzeichnet, dass** es ferner einen Schritt zum Erfassen (102) des Vorliegens wenigstens eines Objektes an dem Leseort umfasst.

3. Verfahren nach einem der vorhergehenden Ansprüche, **dadurch gekennzeichnet, dass** die Deaktivierung (114) wenigstens eines RFID-Tags eine funktionelle Deaktivierung ist.

4. Verfahren nach einem der vorhergehenden Ansprüche, **dadurch gekennzeichnet, dass** es ferner einen Schritt zum Erfassen (116) wenigstens eines RFID-Tags, dessen Identifikationsangabe während des ersten Leseschrittes nicht gelesen wurde, umfasst.

5. Verfahren nach Anspruch 4, **dadurch gekennzeichnet, dass** die Erfassung (116) wenigstens eines RFID-Tags, dessen Identifikationsangabe während des ersten Leseschrittes nicht gelesen wurde, umfasst:
- einen Schritt zum Abfragen (120) von RFID-Tags und einen Schritt zum Erfassen (122) des Sendens von Daten durch ein aktives RFID-Tag infolge der Abfrage oder
- einen Schritt zum Lesen einer Angabe des Tags bezüglich der Deaktivierung.

6. Verfahren nach einem der Ansprüche 4 oder 5, wobei die Erfassung (116) umfasst:
- einen zweiten Schritt zum Lesen (124) wenigstens einer Identifikationsangabe des aktiven RFID-Tags und
- einen Schritt (126), um in Abhängigkeit von zuvor, insbesondere infolge des ersten Leseschrittes gespeicherten tagbezogenen Daten zu bestimmen, ob das Tag während des ersten Leseschrittes gelesen worden ist.

7. Verfahren nach Anspruch 6, wobei der Erfassungsschritt, insbesondere der Bestimmungsschritt, einen Vergleich (126) einer Identifikationsangabe des aktiven RFID-Tags mit zuvor während des ersten Leseschrittes gelesenen Identifikationsdaten umfasst, wobei das Verfahren einen Schritt zum Speichern (106) der während des ersten Leseschrittes (104) gelesenen Identifikationsdaten umfasst.

8. Verfahren nach einem der Ansprüche 4 bis 7, **dadurch gekennzeichnet, dass** es ferner eine Aktivierung (118) eines Signalisierungsmittels (220), wenn ein während des ersten Leseschrittes nicht gelesenes RFID-Tag erfasst wird, umfasst.

9. Verfahren nach einem der vorhergehenden Ansprüche, **dadurch gekennzeichnet, dass** es ferner, für wenigstens eine während des ersten Leseschrittes (104) gelesene Identifikationsangabe, ein Abrufen (108) wenigstens einer Angabe, die mit der in einer Datenbank (304) gespeicherten Identifikationsangabe verknüpft ist, umfasst.

10. Verfahren nach einem der vorhergehenden Ansprüche, das für das automatisierte Bezahlen von mit RFID-Tags versehenen Kaffeekapseln durchgeführt wird.

11. Vorrichtung zum automatisierten Verwalten von Objekten, die jeweils mit einem RFID-Tag versehen sind, das eine dem Objekt zugeordnete Identifikationsangabe umfasst, wobei die Vorrichtung umfasst:
- Mittel zum Lesen (202), sogenannte erste Lesemittel, wenigstens einer Identifikationsangabe, die in wenigstens einem RFID-Tag, das auf wenigstens einem an einem sogenannten Leseort positionierten Objekt angeordnet ist, gespeichert ist,
- Mittel, die ausgebildet sind, um wenigstens ein RFID-Tag, dessen Identifikationsangabe gelesen worden ist, zu deaktivieren,
- Mittel zum Berechnen (110) einer Angabe bezüglich aller gelesenen Tags und
- Mittel zum automatisierten Bezahlen (112) in Abhängigkeit der Angabe bezüglich aller gelesenen Tags,
wobei die Deaktivierungs- (114) und Berechnungsmittel (110) dazu ausgelegt sind, nach ein und demselben Leseschritt, welcher durch die ersten Lesemittel durchgeführt wird, eingesetzt zu werden.

12. Vorrichtung nach Anspruch 11, **dadurch gekennzeichnet, dass** sie ferner Mittel zum Erfassen (210) des Vorliegens wenigstens eines Objektes an dem Leseort umfasst.

13. Vorrichtung nach einem der Ansprüche 11 oder 12, **dadurch gekennzeichnet, dass** sie ferner Mittel zum Abrufen (302), aus einer Datenbank (304), wenigstens einer Angabe, die wenigstens einer gelesenen Identifikationsangabe zugeordnet ist, umfasst.

14. Anwendung der Verwaltungsvorrichtung nach einem der Ansprüche 11 bis 13 auf das automatisierte Bezahlen von mit RFID-Tags versehenen Objekten.

15. System, umfassend eine Verwaltungsvorrichtung nach einem der Ansprüche 11 bis 13 sowie Mittel zum Erfassen eines nicht gelesenen Tags.

16. System nach Anspruch 15, wobei:
- die Erfassungsmittel durch eine Vorrichtung zur Erfassung eines Objektes in einem vorbestimmten Bereich gebildet sind, wobei die Erfassungsvorrichtung zweite Lesemittel (217, 218), um in einem vorbestimmten Bereich wenigstens eine Identifikationsangabe des Tags zu lesen, sowie Mittel (311) umfasst, um in Abhängigkeit von tagbezogenen Daten, die an einem vorbestimmten Ort (309) eines Speichers, mit dem die Erfassungsvorrichtung verbunden ist, gespeichert sind, zu bestimmen, ob das Tag durch die ersten Lesemittel gelesen worden ist, und wobei
- die Verwaltungsvorrichtung Mittel zum Speichern (302) von Daten, in Abhängigkeit der durch die ersten Lesemittel (202) gelesenen Daten, an dem vorbestimmten Ort (309) des Speichers, mit dem auch diese Verwaltungsvorrichtung verbunden ist, umfasst.

17. System nach einem der Ansprüche 15 oder 16, **dadurch gekennzeichnet, dass** es ferner Mittel zum Signalisieren (220) der Erfassung wenigstens eines nicht gelesenen Tags umfasst.

## Claims

1. A method for the automated management of objects each provided with a RFID tag comprising at least one item of identification data associated with said object, said method comprising:
- a step (104) of reading, called first reading step, at least one item of identification data stored in at least one RFID tag arranged on at least one object positioned at a so-called reading site, and
- a step of deactivation (114) of at least one RFID tag the item of identification data of which has been read so that it is not detected during a fraud detection step (116),
- a step of calculation (110) of an item of data relating to all of the tags read, and
- a step of automated payment (112) according to said item of data relating to all of the tags read,
said step of deactivation (114) and step of calculation (110) being carried out after the same and single reading step.

2. The method according to claim 1, **characterized in that** it also comprises a step of detection (102) of the presence of at least one object at the reading site.

3. The method according to any one of the previous claims, **characterized in that** the deactivation (114) of at least one RFID tag is a functional deactivation.

4. The method according to any one of the previous claims, **characterized in that** it also comprises a step of detection (116) of at least one RFID tag the item of identification data of which has not been read during the first reading step.

5. The method according to claim 4, **characterized in that** the detection (116) of at least one RFID tag the item of identification data of which has not been read during the first reading step comprises:
- a step of interrogation (120) of RFID tags and a step of detection (122) of the emission of data by an active RFID tag following the interrogation, or
- a step of reading an item of data of the tag relating to deactivation.

6. The method according to any one of claims 4 or 5, in which the detection (116) comprises:
- a second step (124) of reading at least one item of identification data of the active RFID tag, and
- a step (126) for determining whether the tag has been read during the first reading step, according to data relating to the tags, previously stored, in particular following the first reading step.

7. The method according to claim 6, in which the detection step, in particular the determination step, comprises a comparison (126) of an item of identification data of the active RFID tag with identification data previously read during the first reading step, said method comprising a step of storage (106) of the identification data read during the first reading step (104).

8. The method according to any one of claims 4 to 7, **characterized in that** it also comprises an activation (118) of a signalling means (220) when an RFID tag unread during the first reading step is detected.

9. The method according to any one of the previous claims, **characterized in that** it also comprises, for at least one item of identification data read during the first reading step (104), a consultation (108) of at least one item of data associated with said item of identification data stored in a database (304).

10. The method according to any one of the previous claims implemented for the automated payment for coffee capsules provided with RFID tags.

11. A device for the automated management of objects each provided with an RFID tag comprising an item of identification data associated with said object, said device comprising:
- means (202), denoted first reading means, for reading at least one item of identification data stored in at least one RFID tag arranged on at least one object positioned at a so-called reading site, and
- means arranged for deactivating at least one RFID tag the item of identification data of which has been read,
- calculation means (110) for determining at least one item of data relating to all of the tags read, and
- automated payment means (112) for automatic payment according to said data relating to all of the tags read;
said deactivation means (114) and calculation means (110) are configured to operate after a same and single reading step carried out by said first reading means.

12. The device according to claim 11, **characterized in that** it also comprises means (210) for detecting the presence of at least one object at the reading site.

13. The device according to any one of claims 11 or 12, **characterized in that** it also comprises means for consulting (302), in a database (304), at least one item of data associated with at least one read item of identification data.

14. A use of the management device according to any one of claims 11 to 13 for the automated payment of object provided with RFID tags.

15. A system comprising a management device according to any one of claims 11 to 13 and means for detecting an unread tag.

16. The system according to claim 15, in which:
- the detecting means are constituted by a device for detecting an object in a predetermined zone, said detecting device comprising second reading means (217, 218) for reading, in a predetermined zone, at least one item of identification data of the tag and means (311) for determining whether the tag has been read by the first reading means, according to data relating to the tags and stored at a predetermined location (309) of a memory to which the detection device is connected, and
- the management device comprises data storage means (302) according to the data read by the first reading means (202), at the predetermined memory location (309), to which this management device is also connected.

17. The system according to any one of claims 15 or 16, **characterized in that** it also comprises means (220) for signalling the detection of at least one unread tag.
